# EUROPÄISCHE PATENTSCHRIFT

(11) **EP 0 935 895 B1**
(45) Veröffentlichungstag und Bekanntmachung des Hinweises auf die Patenterteilung: **08.01.2003**
(21) Anmeldenummer: 97912048.2
(22) Anmeldetag: 14.10.1997
(51) Int. Cl.: H04Q 7/24, H04B 7/26

(54) **VERFAHREN UND TELEKOMMUNIKATIONSSCHNITTSTELLE ZUM ÜBERTRAGEN KONTINUIERLICHER UND/ODER DISKONTINUIERLICHER DATENSTRÖME IN EINEM HYBRIDEN TELEKOMMUNIKATIONSSYSTEM, INSBESONDERE EINEM "ISDN - DECT-SPEZIFISCHEN RLL/WLL"-SYSTEM**
METHOD AND TELECOMMUNICATION INTERFACE FOR THE TRANSMISSION OF CONTINUOUS AND/OR DISCONTINUOUS DATA STREAMS IN A HYBRID TELECOMMUNICATION SYSTEM, ESPECIALLY AN "ISDN - DECT SPECIFIC RLL/WLL" SYSTEM
PROCEDE ET INTERFACE DE TELECOMMUNICATIONS POUR LA TRANSMISSION DE TRAINS DE DONNEES CONTINUS ET/OU DISCONTINUS DANS UN SYSTEME DE TELECOMMUNICATIONS HYBRIDE, NOTAMMENT UN SYSTEME "RLL/WLL SPECIFIQUE ISDN - DECT"

(30) Priorität: 23.10.1996 DE 19643774
(43) Veröffentlichungstag der Anmeldung: 18.08.1999
(73) Patentinhaber: SIEMENS AKTIENGESELLSCHAFT, 80333 München (DE)
(72) Erfinder: BIEDERMANN, Rolf, D-48683 Ahaus (DE)
(86) Internationale Anmeldenummer: DE9702352
(87) Internationale Veröffentlichungsnummer: WO98018277

(56) Entgegenhaltungen:
- WO-A-93/21719
- DE-A- 19 625 142
- IP W H ET AL: "CORDLESS ACCESS TO THE ISDN BASIC RATE SERVICE" UK TELETRAFFIC SYMPOSIUM, 1.Januar 1993, Seiten 29.01-29.07, XP002052027 in der Anmeldung erwähnt

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al: "Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
übertragen werden. Die Übertragungsart gemäß (1 ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren und Telekommunikationsschnittstelle zum Übertragen kontinuierlicher und/oder diskontinuierlicher Datenströme in einem hybriden Telekommunikationssystem, insbesondere einem "ISDN ↔ DECT-spezifischen RLL/WLL"-System gemäß dem Oberbegriff des Patentanspruches 1.

Hybride Telekommunikationssysteme sind z.B. unterschiedliche - drahtlose und/oder drahtgebundene - Telekommunikationsteilsysteme enthaltende Nachrichtensysteme.

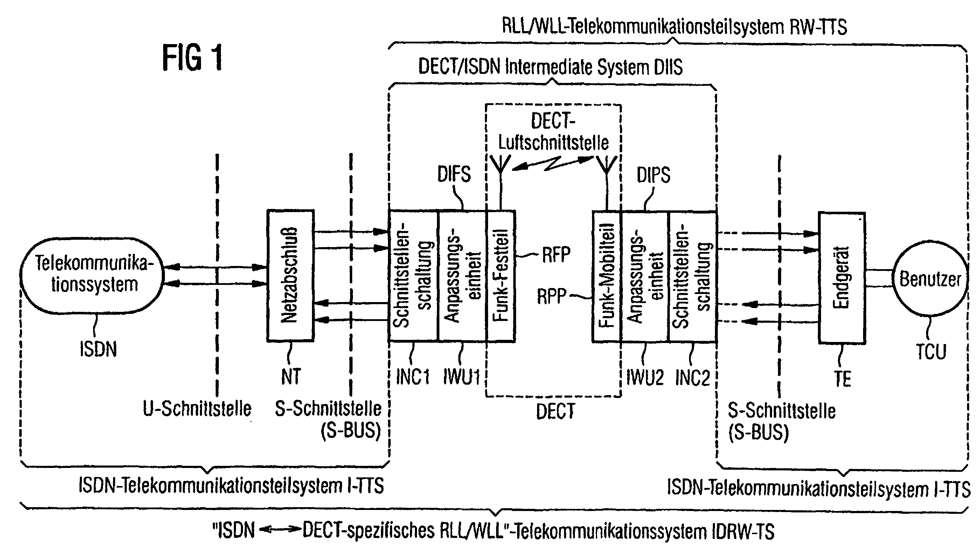

FIGUR 1 zeigt -stellvertretend für die Vielzahl der hybriden Telekommunikationssysteme - ausgehend von den Druckschriften *"Nachrichtentechnik Elektronik, Berlin 45 (1995) Heft 1, Seiten 21 bis 23 und Heft 3 Seiten 29 und 30" sowie IEE Colloquium 1993, 173; (1993), Seiten 29*/*1 - 29*/*7; W.Hing, F.Halsall:"Cordless access to the ISDN basic rate service"* auf der Basis eines **D**ECT/**I**SDN **I**ntermediate **S**ystems DIIS gemäß der *ETSI-Publikation prETS 300xxx, Version 1.10, September 1996* ein "**I**SDN ↔ **D**ECT-spezifisches **R**LL/**W**LL"-**T**elekommunikations**s**ystem IDRW-TS (**I**ntegrated **S**ervices **D**igital **N**etwork ↔ **R**adio in the **L**ocal **L**oop/**W**ireless in the **L**ocal **L**oop) mit einem **I**SDN-**T**elekommunikations**t**eil**s**ystem I-TTS [*vgl. Druckschrift "Nachrichtentechnik Elektronik, Berlin 41-43,* ***T****eil: 1 bis 10,* ***T****1: (1991) Heft 3, Seiten 99 bis 102;* ***T****2: (1991) Heft 4, Seiten 138 bis 143; **T**3: (1991) Heft 5, Seiten 179 bis 182 und Heft 6, Seiten 219 bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten* *99 bis 102;* ***T****6: (1992) Heft 4, Seiten 150 bis 153;* ***T****7: (1992) Heft 6, Seiten 238 bis 241;* ***T****8: (1993) Heft 1, Seiten 29 bis 33;* ***T****9: (1993) Heft 2, Seiten 95 bis 97 und (1993) Heft 3, Seiten 129 bis 135;* ***T****10: (1993) Heft 4, Selten 187 bis 190;*"] und einem DECT-spezifischen **R**LL/**W**LL-**T**elekommunikations**t**eil**s**ystem RW-TTS.

Das DECT/ISDN Intermediate System DIIS bzw. das RLL/WLL-Telekommunikationsteilsystem RW-TTS basiert dabei vorzugsweise auf ein **D**ECT/**G**AP-**S**ystem DGS [**D**igital **E**nhanced (früher:**E**uropean) **C**ordless **T**elecommunication; vgl. **(1):** Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4):** Philips Telecommunication Review Vol. 49, No. 3, Sept. 1991, R.J. Mulder:" DECT, a universal cordless access system"; **(5):** WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444, April 1995).*

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsrnethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z.B. bei dem RLL/WLL-Telekommunikationsteilsystems RW-TTS die drahtlose Anschlußtechnik RLL/WLL (**R**adio in the **L**ocal **L**oop/**W**ireless in the **L**ocal **L**oop) z.B. unter der Einbindung des DECT-System DS dem ISDN-Teilnehmer ISDN-Dienste an Standard-ISDN-Schnittstellen verfügbar gemacht werden (vgl. FIGUR 1).

In dem "ISDN ↔ DECT-spezifisches RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystems RW-TTS enthaltene- DECT/ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

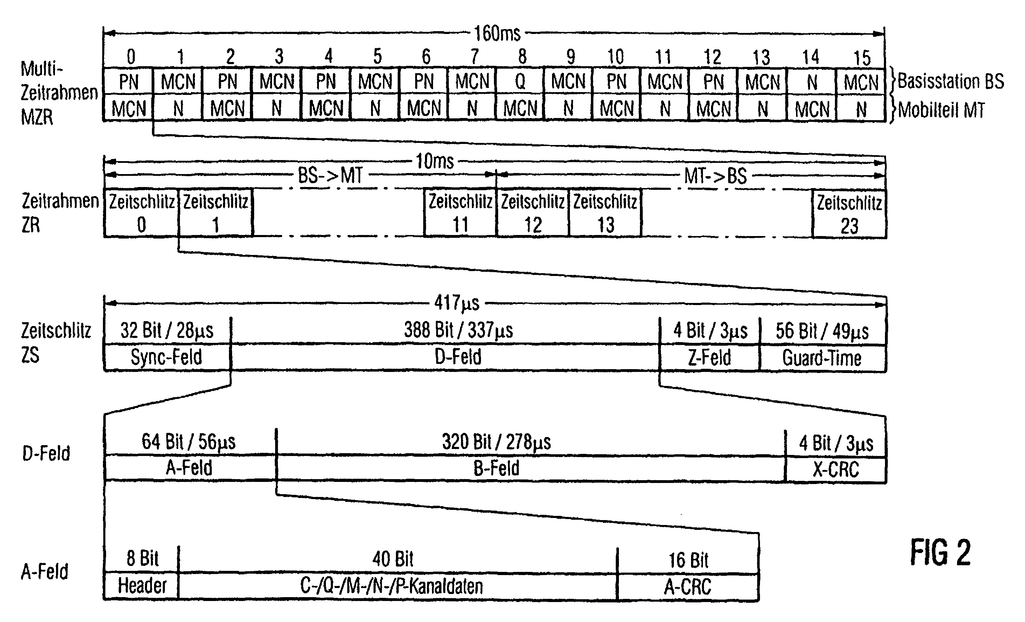

FIGUR 2 zeigt in Anlehnung an die Druckschrift *"Nachrichtentechnik Elektronik 42 (1992) Jan.*/*Feb., Nr. 1, Berlin, DE; U. Pilger: "Struktur des DECT-Standards", Seiten 23 bis 29 in Verbindung mit ETS 300 175-1...9, Oktober 1992*" die TDMA-Struktur eines DECT/GAP-Systems. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation RFP → Mobilteil RPP" und weitere 12 Zeitschlitze ZS (Zeitschlitze 12 ... 23) für die Übertragungsrichtung "Mobilteil RPP → Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen. Die in FIGUR 2 dargestellte DECT-Übertragungsstruktur wird als "Full-Slot-Format" bezeichnet. Zusätzlich ist im DECT-Standard noch ein "Double-Slot-Format" definiert (vgl. WO93/21719).

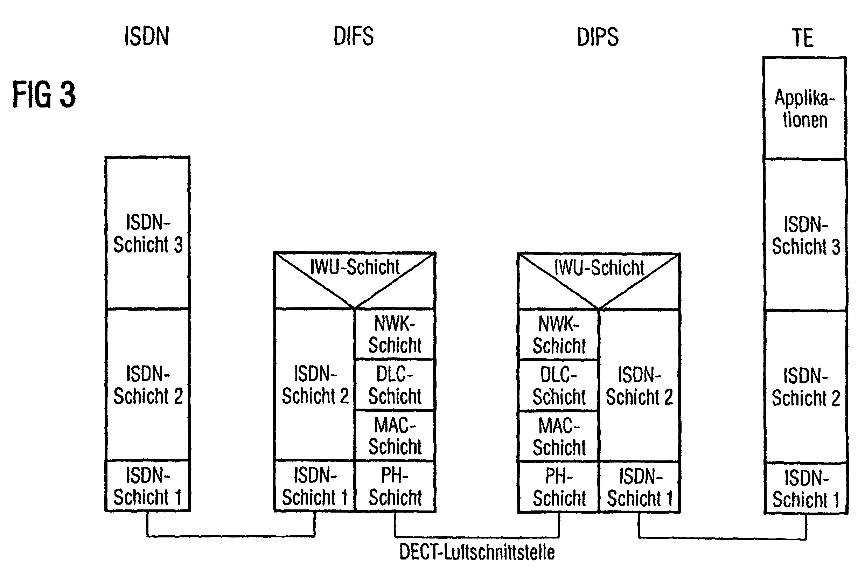

Figur 3 zeigt auf der Basis des OSI/ISO-Schichtenmodells [*vgl.* ***(1):*** *Unterrichtsblätter - Deutsche Telekom Jg. 48, 2*/*1995, Seiten 102 bis 111;* ***(2):*** *ETSI-Publikation ETS 300175-1..9. Oktober 1992;* ***(3):*** *ETSI-Publikation ETS 300102, Februar 1992;* ***(4):*** *ETSI-Publikatian ETS 300125, September 1991;* ***(5):*** *ETSI-Publikation ETS 300012, April 1992*] ein Modell der C-Ebene des "ISDN ↔ DECT-spezifischen RLL/WLL"-Telekommunikationssystems IDRW-TS nach FIGUR 1 *(vgl. ETSI-Publikation prETS 300xxx, Version 1.10, September 1996, Kap. 5, Figur 3).*

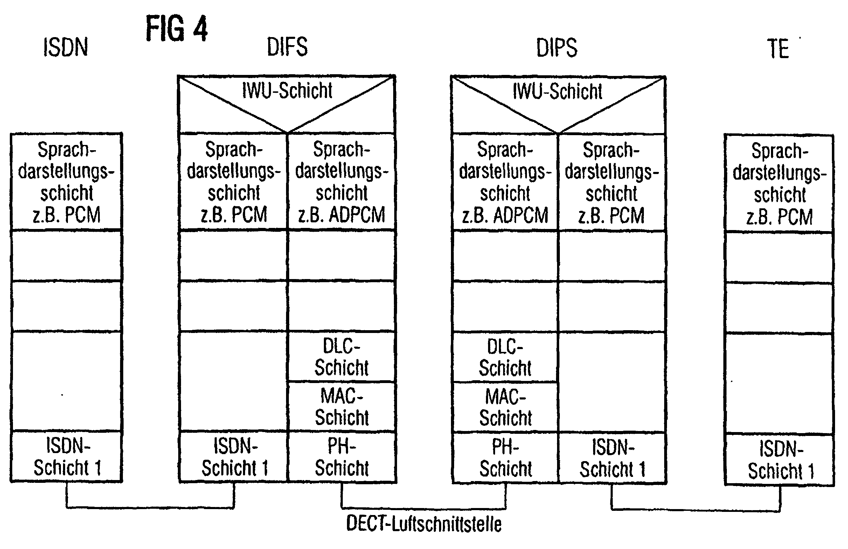

Figur 4 zeigt auf der Basis des OSI/ISO-Schichtenmodells [*vgl.* ***(1):*** *Unterrichtsblätter - Deutsche Telekom Jg. 48, 2*/*1995, Seiten 102 bis 111;* ***(2):*** *ETSI-Publikation ETS 300175-1..9. Oktober 1992;* ***(3):*** *ETSI-Publikation ETS 300102, Februar 1992;* ***(4):*** *ETSI-Publikation ETS 300125, September 1991;* ***(5):*** *ETSI-Publikation ETS 300012, April 1992]* ein Modell der U-Ebene für Sprachdatenübertragung des "ISDN ↔ DECT-spezifischen RLL/WLL"-Telekommunikationssystems IDRW-TS nach FIGUR 1 *(vgl. ETSI-Publikation prETS 300xxx, Version 1.10, September 1996, Kap. 5, Figur 4).*

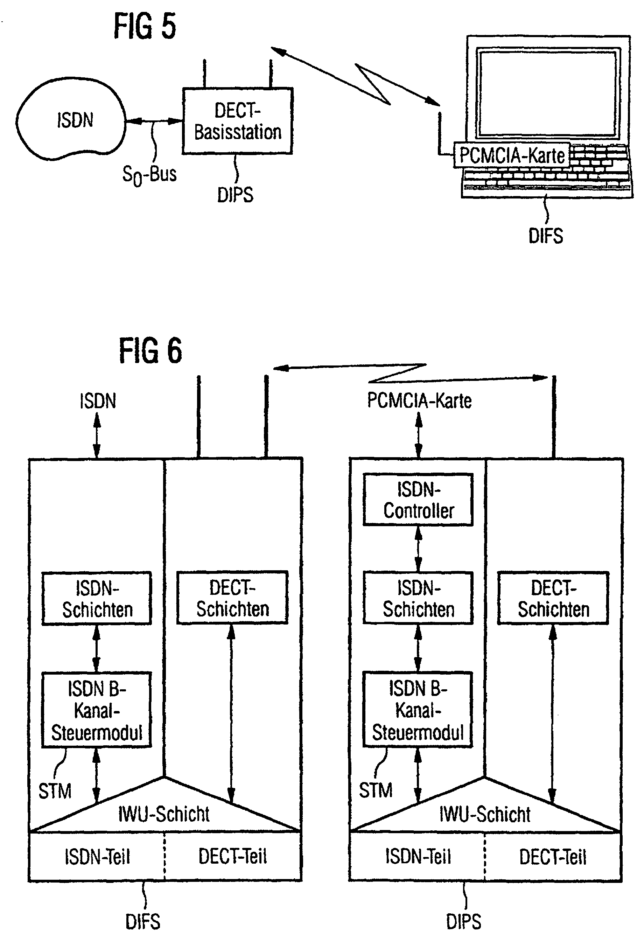

FIGUR 5 zeigt ausgehend von den FIGUREN 1 bis 4 einen möglichen Anwendungsfall des hybriden Telekommunikationssystems nach FIGUR 1. Danach soll ein ISDN-Teilnehmer, der seinen ISDN-Anschluß zur Datenübertragung nutzen möchte (z. B. um einen Personal Computer mit dem Internet zu verbinden), hierfür über das DECT/ISDN Intermediate System DIIS eine Telekommunikationsverbindung zum ISDN-Festnetz herstellen können. Als erste Telekommunikationsschnittstelle DIFS gemäß FIGUR 1 dient dabei eine DECT-Basisstation, die eine wie auch immer beschaffene Verbindung (z.B. über einen S₀-Bus) zum ISDN-Netz aufweist. Als zweite Telekommunikationsschnittstelle DIPS gemäß FIGUR 1 dient dabei der bereits vorstehend erwähnte Personal Computer mit einer PCMCIA-Karte und einem DECT-Funkteil.

Für das dargestellte Szenario ist es erwünscht, die DECT-Kanalressourcen effizient zu nutzen und das für die ISDN-Übertragung standardisierte DECT/ISDN-Protokoll-Profil *(vgl. ETSI-Publikation prETS 300xxx, Version 1.10, September 1996)* und/oder ein geeignetes DECT-Datenübertragung-Protokoll-Profil effizient zu nutzen.

Bei dem DECT/ISDN Intermediate System (DECT/ISDN-Protokoll-Profil) ist es möglich, z. B. einen Sₒ-Anschluß einem ISDN-Teilnehmer drahtlos über eine DECT-Luftschnittstelle zur Verfügung zu stellen. Hierbei wird abhängig von dem ISDNspezifischen Service (Sprache, Daten, etc.) jeweils ein DECT-Funkkanal für den ISDN-D-Kanal und die beiden B-Kanäle aufgebaut. Für den ISDN-D-Kanal wird zunächst ein DECT-Traffic-Bearer im "Full-Slot-Format" d.h. 320 Bit Nutzdaten pro 10 ms bzw. pro TDMA-Rahmen) aufgebaut. Werden für die ISDN-Verbindung ISDN-B-Kanäle benötigt, so wird pro B-Kanal je nachdem, ob beispielsweise Sprachdaten oder Videodaten übertragen werden sollen, ein DECT-Traffic-Bearer im "Full-Slot-Format" d.h. 320 Bit Nutzdaten pro 10 ms bzw. pro TDMA-Rahmen) oder ein DECT-Traffic-Bearer im "Double-Slot-Format" (800 Bit Nutzdaten pro 10 ms bzw. pro TDMA-Rahmen) aufgebaut. Das "Full-Slot-Format" des ISDN-D-Kanals wird jedoch nur für die Zeit benötigt, in der sehr viele ISDN-Signalisierungsdaten übertragen werden müssen. Dies geschieht typischerweise am Anfang einer Verbindung. Aus dieser ISDN-D-Kanal-Signalisierung wird erschichtlich, ob die ISDN-Verbindung ISDN-B-Kanäle benötigt und wie viele. Es werden dementsprechend ein oder zwei DECT-Traffic-Bearer im "Double-Slot-Format" aufgebaut bzw. ein oder zwei "Double Slot" belegt. Nimmt nun die Datenrate auf dem ISDN-D-Kanal ab, so wird der DECT-Traffic-Bearer im "Full-Slot-Format" abgebaut, und die Signalisierung wird im A-Feld eines der beiden DECT-Traffic-Bearer im "Double-Slot-Format" fortgesetzt. Dies ist leider nicht von Anfang an möglich, da die Datenrate des ISDN-D-Kanals höher ist als die im A-Feld eines DECT-Traffic-Bearers. Deshalb wird, falls erkannt wird, daß die Datenrate im ISDN-D-Kanal wieder steigt, auch der DECT-Traffic-Bearer im "Full-Slot-Format" für den ISDN-D-Kanal bei Bedarf wieder aufgebaut. Mit diesem Mechanismus soll die Belastung des DECT-Spektrums durch den ISDN-D-Kanal minimiert werden *(vgl. deutsche Patentanmeldung 19625142.7).* Ist jedoch erst einmal eine solche ISDN-Verbindung über die DECT-Luftschnittstelle aufgebaut, so belegt jeder der ISDN-B-Kanäle einen "DECT-Double-Slot" (entsprechend 2 von 120 DECT-Kanälen) und zwar so lange, bis die Verbindung wieder abgebaut wird.

Handelt es sich um ISDN-Verbindungen, bei denen ein kontinuierlicher (stetiger) Datenstrom (Sprache, Video, Modem) übertragen wird, so ist eine entsprechende Belastung des DECT-Spektrums gerechtfertigt.

Zur Zeit wird das ISDN jedoch immer stärker für eine "echte" protokollgesteuerte Datenübertragung [z. B. Internet-Ankopplung, "Paketdaten" (diskoninuierlicher Datenstrom)] genutzt. Hierzu belegt ein ISDN-Controller, der an den Personal Computer angeschlossen ist, für die komplette Zeit einer Datenübertragungssitzung (Session) einen oder mehrere ISDN-B-Kanäle. Würde eine solche Session über die DECT-Luftschnittstelle übertragen werden, so wäre dementsprechend für die gesamte Zeit der Session die entsprechende Anzahl an DECT-Kanälen belegt.

Untersuchungen haben jedoch gezeigt, daß während einer solchen Session die mit den ISDN-B-Kanälen mögliche Kapazität über die Gesamtzeit der Session nur zu ca. 5-10 % genutzt wird, da sich die Datenübertragung selbst nur in einigen kurzen Momenten abspielt.

Ursprünglich sind für solche Datenübertragung die DECT-Datenübertragung-Protokoll-Profile vorgesehen worden, die jedoch nicht - wie das DECT/ISDN-Protokoll-Profil - für den DECT-ISDN-Betrieb optimiert und daher ungeeignet sind.

Da jedoch eine effiziente Nutzung des DECT-Spektrums erwünscht ist (Standardisierung), möchte man für solche "Packet Data"-Dienste gerne eines der DECT-Datenübertragung-- Protokoll-Profile anwenden, kann sich aber nicht auf einen zugehörigen physikalischen Datenport einigen.

Die der Erfindung zugrundeliegende Aufgabe besteht darin, in einem hybriden Telekommunikationssystem, insbesondere einem "ISDN ↔ DECT-spezifischen RLL/WLL"-System, kontinuierliche und/oder diskontinuierliche Datenströme bei minimalem technischen Aufwand, z.B. ohne jeweils separate physikalische Datenports (Datenein- und Datenausgänge) für die Datenströme, zu übertragen.

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Außerdem wird diese Aufgabe ausgehend von der in dem Oberbegriff des Patentanspruches 11 definierten Telekommunikationsschnittstelle durch die in dem Kennzeichen des Patentanspruches 11 angegebenen Merkmale gelöst.

Die der Erfindung zugrundeliegende Idee besteht darin, kontinuierlicher und/oder diskontinuierlicher Datenströme (z.B. Sprach- und Videodaten/"Packet Data") in einem hybriden Telekommunikationssystem, insbesondere einem "ISDN ↔ DECT-spezifischen RLL/WLL"-System nach FIGUR 1, in Abhängigkeit von der Analyse der Datenübertragungssituation auf einem ersten Telekommunikationskanal bzw. ersten Telekommunikationskanälen (z.B. den ISDN-B-Kanal bzw. die ISDN-B-Kanäle) auf einer an die analysierte Datenübertragungssituation angepaßten Anzahl von zweiten Telekommunikationskanälen (z.B. DECT-Kanälen) zu übertragen.

Um für jede Datenübertragungssituation auf die entsprechende Kanalanzahl zu kommen, werden die zweiten Telekommunikationskanäle derart dynamisch auf- oder abgebaut, daß die Anzahl der zweiten Telekommunikationskanäle minimal ist.
Grundlage dieser Lösung ist ein intelligentes, auf eine effektive Nutzung des DECT-Spektrums - durch ISDN-B-Channel-Management - optimiertes Steuermodul (z.B. programmgestützter Controller) auf beiden Seiten der DECT/ISDN-Übertragungsstrecke.

Vorteilhafte Weiterbildungen der Erfindung sind in den Unteranssprüchen angegeben.

Ein Ausführungsbeispiel der Erfindung wird anhand der FIGUR 6 erläutert.

FIGUR 6 zeigt ausgehend von den FIGUREN 1, 3, 4 und 5 die DECT/ISDN-Protokollhierarchien für die beiden Telekommunikationsschnittstellen DIFS, DIPS nach FIGUR 5. Sowohl die DECT/ISDN-Protokollhierarchie der ersten Telekommunikationsschnittstelle DIFS als auch die DECT/ISDN-Protokollhierarchie der zweiten Telekommunikationsschnittstelle DIPS weist ein als ISDN-B-Kanal-Manager ausgebildetes Steuermodul STM auf, das z.B. in dem jeweiligen ISDN-Teil zur physikalischen und logischen Funktionssteuerung (als physikalische und logische Funktionseinheit) zwischen der IWU-Schicht und den übrigen untergeordneten ISDN-Schichten realisiert ist. Die Aufgabe (Funktion) des Steuermoduls STM läßt sich wie folgt beschreiben:
a) Ausschließliche Nutzung des DECT/ISDN-Protokoll-Profil *(vgl. ETSI-Publikation prETS 300xxx, Version 1.10, September 1996)*:
   Der ISDN-B-Channel Manager kontrolliert den zu unterstützenden ISDN-Service. Handelt es sich um Paketdaten, so veranlaßt der ISDN-B-Channel Manager einen dynamischen Auf- und Abbau von ISDN-B-Kanälen, abhängig davon, ob Daten zum Versenden anstehen oder nicht. Das DECT/ISDN Intermediate System reagiert dadurch automatisch mit dem entsprechenden Auf- und Abbau von DECT-Traffic-Bearer im "Double-Slot-Format" an der DECT-Luftschnittstelle. Dieses Verfahren hat den Vorteil, daß das DECT/ISDN-Protokoll-Profil ohne Änderungen und zusätzliche Implementierungen im DECT-Teil eingesetzt werden kann, da die Intelligenz zur ISDN-B-Kanal Steuerung im ISDN-Teil (ISDN-Controller) liegt.
b) Zusätzliche Nutzung des DECT-Datenübertragung-Protokoll-Profils:
   Die unter a) beschriebene Methode hat einen Nachteil: die belegte Kanalkapazität ist noch immer nicht minimal, da bei den beschriebenen Paketdaten-Diensten in den meisten Fällen die Daten nur mal von der einen zur anderen Seite und umgekehrt, selten aber in beiden Richtungen gleichzeitig gesendet werden. Auf diese Übertragungsart sind die DECT-Datenübertragung-Protokoll-Profils zugeschnitten.
   Es wird also zusätzlich zum DECT/ISDN-Protokoll-Profil ein passendes DECT-Datenübertragung-Protokoll-Profil in beiden Telekommunikationsschnittstellen DIFS, DIPS implementiert. Diese DECT-Datenübertragungs-Protokoll-Profile schalten abhängig von der geforderten Datenübertragungsrate immer dann einen DECT-Traffic-Bearer im "Full-Slot-Format" bzw. einen DECT-Traffic-Bearer im "Double-Slot-Format" ein, wenn sie benötigt werden und auch nur in der Simplex-Übertragungsstrecke (DIFS zum DIPS oder DIPS zum DIFS), wo sie benötigt werden.
   Nun ist es wieder Aufgabe des ISDN-B-Channel Manager zu entscheiden, welches der Protokollprofile für eine Übertragung zur Anwendung kommt. Es führt dann eine Umschaltung auf DECT-Übertragung nach dem DECT-Datenübertragung-Protokoll-Profil um, sobald erkannt wird, daß es sich um eine Paketdaten-Übertragung handelt. Bei dieser Variante regelt dann der DECT-Teil den dynamischen Auf- und Abbau der DECT-Kanäle.
   Die ISDN-B-Kanäle der ISDN-Verbindung von der DECT-Basisstation zum ISDN-Festnetz bleiben bei beiden Varianten natürlich über die gesamte Zeit der Session aufgebaut.

## Patentansprüche

1. Verfahren zum Übertragen kontinuierlicher und/oder diskontinuierlicher Datenströme in einem hybriden Telekommunikationssystem, insbesondere einem "ISDN ↔ DECT-spezifischen RLL/WLL"-System,
a) wobei das hybride Telekommunikationssystem
a1) ein erstes Telekommunikationsteilsystem (I-TTS) mit mindestens einen ersten Telekommunikationskanal und
a2) ein zweites Telekommunikationsteilsystem (DIIS, RW-TTS) mit einer vorgegebenen Anzahl von zweiten Telekommunikationskanälen
enthält,
b) wobei das zweite Telekommunikationsteilsystem (DIIS, RW-TTS) zur Übertragung der Datenströme eine erste Telekommunikationsschnittstelle (DIFS) und eine zweite Telekommunikationsschnittstelle (DIPS) aufweist, die über den zweiten Telekommunikationskanal bzw. die zweiten Telekommunikationskanäle miteinander verbunden sind,
c) wobei das zweite Telekommunikationsteilsystem (DIIS, RW-TTS) als lokale Nachrichtenübertragungsschleife über die beiden Telekommunikationsschnittstellen (DIFS, DIPS) in das erste Telekommunikationsteilsystem (I-TTS) eingebunden ist,
**dadurch gekennzeichnet, daß** die Telekommunikationsschnittstellen (DIFS, DIPS) die Datenübertragungssituation auf dem ersten Telekommunikationskanal bzw. den ersten Telekommunikationskanälen bezüglich dessen, ob Daten zum Übertragen anstehen oder nicht, ob es sich um eine Übertragung von diskontinuierlichen Datenströmen handelt oder nicht oder der Datenübertragungsrate analysieren und in Abhängigkeit von dieser Analyse den zweiten Telekommunikationskanal bzw. die zweiten Telekommunikationskanäle derart dynamisch auf- oder abbauen, daß für die jeweilige Datenübertragungssituation die Anzahl der zweiten Telekommunikationskanäle minimal ist.

2. Verfahren nach Anspruch 1, **dadurch gekennzeichnet, daß**
das erste Telekommunikationsteilsystem (I-TTS) nach dem ISDN-Standard funktioniert, wobei die auf dem ersten Telekommunikationskanal bzw. den ersten Telekommunikationskanälen übertragenen Daten auf einem ISDN-B-Kanal bzw. ISDN-B-Kanälen übertragen werden.

3. Verfahren nach Anspruch 1 oder 2, **dadurch gekennzeichnet, daß**
das zweite Telekommunikationsteilsystem (DIIS, RW-TTS) nach dem DECT-Standard funktioniert, wobei die auf der vorgegebenen Anzahl von zweiten Telekommunikationskanälen übertragenen Daten auf DECT-Kanälen übertragen werden.

4. Verfahren nach Anspruch 1 oder 2, **dadurch gekennzeichnet, daß**
das zweite Telekommunikationsteilsystem (DIIS, RW-TTS) nach dem GSM-Standard funktioniert, wobei die auf der vorgegebenen Anzahl von zweiten Telekommunikationskanälen übertragenen Daten auf GSM-Kanälen übertragen werden.

5. Verfahren nach Anspruch 1 oder 2, **dadurch gekennzeichnet, daß**
das zweite Telekommunikationsteilsystem (DIIS, RW-TTS) nach dem PHS-, WACS- oder PACS-Standard funktioniert, wobei die auf der vorgegebenen Anzahl von zweiten Telekommunikationskanälen übertragenen Daten auf PHS-, WACS- bzw. PACS-Kanälen übertragen werden.

6. Verfahren nach Anspruch 1 oder 2, **dadurch gekennzeichnet, daß**
das zweite Telekommunikationsteilsystem (DIIS, RW-TTS) nach dem "IS-54"- oder PDC-Standard funktioniert, wobei die auf der vorgegebenen Anzahl von zweiten Telekommunikationskanälen übertragenen Daten auf "IS-54"- bzw. PDC-Kanälen übertragen werden.

7. Verfahren nach Anspruch 1 oder 2, **dadurch gekennzeichnet, daß**
das zweite Telekommunikationsteilsystem (DIIS, RW-TTS) nach dem CDMA-, TDMA-, und/oder FDMA-Übertragungsprinzip funktioniert, wobei die auf der vorgegebenen Anzahl von zweiten Telekommunikationskanälen übertragenen Daten auf nach dem CDMA-, TDMA-, und/oder FDMA-Übertragungsprinzip funktionierenden Kanälen übertragen werden.

8. Verfahren nach Anspruch 3, **dadurch gekennzeichnet, daß**
die erste Telekommunikationsschnittstelle (DIFS) und die zweite Telekommunikationsschnittstelle (DIPS) nach dem "DECT/ISDN Intermediate"-Standard funktionieren.

9. Verfahren nach einem der Ansprüche 1 bis 8, **dadurch gekennzeichnet, daß**
Sprach-, Video- und/oder Modemdaten den kontinuierlichen Datenströmen zugeordnet werden.

10. Verfahren nach einem der Ansprüche 1 bis 9, **dadurch gekennzeichnet, daß**
Paketdaten den diskontinuierlichen Datenströmen zugeordnet werden.

11. Telekommunikationsschnittstelle zum Übertragen kontinuierlicher und/oder diskontinuierlicher Datenströme in einem hybriden Telekommunikationssystem, insbesondere einem "ISDN ↔ DECT-spezifischen RLL/WLL"-System,
a) wobei das hybride Telekommunikationssystem
a1) ein erstes Telekommunikationsteilsystem (I-TTS) mit mindestens einen ersten Telekommunikationskanal und
a2) ein zweites Telekommunikationsteilsystem (DIIS, RW-TTS) mit einer vorgegebenen Anzahl von zweiten Telekommunikationskanälen
enthält,
b) wobei das zweite Telekommunikationsteilsystem (DIIS, RW-TTS) zur Übertragung der Datenströme eine erste Telekommunikationsschnittstelle (DIFS) und eine zweite Telekommunikationsschnittstelle (DIPS) aufweist, die über den zweiten Telekommunikationskanal bzw. die zweiten Telekommunikationskanäle miteinander verbunden sind,
c) wobei das zweite Telekommunikationsteilsystem (DIIS, RW-TTS) als lokale Nachrichtenübertragungsschleife über die beiden Telekommunikationsschnittstellen (DIFS, DIPS) in das erste Telekommunikationsteilsystem (I-TTS) eingebunden ist,
**dadurch gekennzeichnet, daß** ein Steuermodul (STM) vorgesehen ist, das die Datenübertragungssituation auf dem ersten Telekommunikationskanal bzw. den ersten Telekommunikationskanälen bezüglich dessen, ob Daten zum Übertragen anstehen oder nicht, ob es sich um eine Übertragung von diskontinuierlichen Datenströmen handelt oder nicht oder der Datenübertragungsrate analysiert und in Abhängigkeit von dieser Analyse den zweiten Telekommunikationskanal bzw. die zweiten Telekommunikationskanäle derart dynamisch auf- oder abbaut, daß für die jeweilige Datenübertragungssituation die Anzahl der zweiten Telekommunikationskanäle minimal ist.

## Claims

1. Method for transmission of continuous and/or discontinuous datastreams in a hybrid telecommunications system, in particular an "ISDN ↔ DECT-specific RLL/WLL" system,
a) with the hybrid telecommunications system containing
a1) a first telecommunications subsystem (I-TTS) with at least one first telecommunications channel and
a2) a second telecommunications subsystem (DIIS, RW-TTS) with a predetermined number of second telecommunications channels
b) with the second telecommunications subsystem (DIIS, RW-TTS) having a first telecommunications interface (DIFS) and a second telecommunications interface (DIPS) for transmission of the datastreams, which interfaces, are connected to one another via the second telecommunications channel or the second telecommunications channels,
c) with the second telecommunications subsystem (DIIS, RW-TTS) being linked to the first telecommunications subsystem (I-TTS) as a local message transmission loop via the two telecommunications interfaces (DIFS, DIPS),
**characterized in that** the telecommunications interfaces (DIFS, DIPS) analysing the data transmission situation on the first telecommunications channel or on the first telecommunications channels on the basis of whether data for transmission is or is not present, whether or not a transmission is a transmission of discontinuous datastreams or the data transmission rate, and dynamically setting up or clearing down the second telecommunications channel or the second telecommunications channels as a function of this analysis, such that the number of second telecommunications channels is a minimum for the respective data transmission situation.

2. Method according to Claim 1, **characterized in that** the first telecommunications subsystem (I-TTS) operates in accordance with the ISDN standard, with the data which is transmitted on the first telecommunications channel or on the first telecommunications channels being transmitted on one ISDN-B channel or ISDN-B channels, respectively.

3. Method according to Claim 1 or 2, **characterized in that**
the second telecommunications subsystem (DIIS, RW-TTS) operates in accordance with the DECT standard, with the data which is transmitted on the predetermined number of second telecommunications channels being transmitted on DECT channels.

4. Method according to Claim 1 or 2, **characterized in that**
the second telecommunications subsystem (DIIS, RW-TTS) operates in accordance with the GSM standard, with the data which is transmitted on the predetermined number of second telecommunications channels being transmitted on GSM channels.

5. Method according to Claim 1 or 2, **characterized in that**
the second telecommunications subsystem (DIIS, RW-TTS) operates in accordance with the PHS, WACS or PACS standard, with the data which is transmitted on the predetermined number of second telecommunications channels being transmitted on PHS, WACS or PACS channels, respectively.

6. Method according to Claim 1 or 2, **characterized in that**
the second telecommunications subsystem (DIIS, RW-TTS) operates in accordance with the "IS-54" or PDC standard, with the data which is transmitted on the predetermined number of second telecommunications channels being transmitted on "IS-54" or PDC channels, respectively.

7. Method according to Claim 1 or 2, **characterized in that**
the second telecommunications subsystem (DIIS, RW-TTS) operates in accordance with the CDMA, TDMA and/or FDMA transmission principle, with the data which is transmitted on the predetermined number of second telecommunications channels being transmitted on channels which operate in accordance with the CDMA, TDMA and/or FDMA transmission principle.

8. Method according to Claim 3, **characterized in that** the first telecommunications interface (DIFS) and the second telecommunications interface (DIPS) operate in accordance with the "DECT/ISDN intermediate" standard.

9. Method according to Claims 1 to 8, **characterized in that**
speech, video and/or modem data are/is allocated to the continuous datastreams.

10. Method according to Claims 1 to 9, **characterized in that**
packet data is allocated to the discontinuous datastreams.

11. Telecommunications interface for the transmission of continuous and/or discontinuous datastreams in a hybrid telecommunications system, in particular an "ISDN ↔ DECT-specific RLL/WLL" system,
a) with the hybrid telecommunications system containing
a1) a first telecommunications subsystem (I-TTS) with at least one first telecommunications channel and
a2) a second telecommunications subsystem (DIIS, RW-TTS) with a predetermined number of second telecommunications channels
b) with the second telecommunications subsystem (DIIS, RW-TTS) having a first telecommunications interface (DIFS) and a second telecommunications interface (DIPS) for transmission of the datastreams, which interfaces are connected to one another via the second telecommunications channel or the second telecommunications channels,
c) with the second telecommunications subsystem (DIIS, RW-TTS) being linked to the first telecommunications subsystem (I-TTS) as a local message transmission loop via the two telecommunications interfaces (DIFS, DIPS),
**characterized in that** a control module (STM) is provided, which analyses the data transmission situation on the first telecommunications channel or on the first telecommunications channels on the basis of whether data for transmission is or is not present, whether or not a transmission is a transmission of discontinuous datastreams or the data transmission rate, and dynamically sets up or clears down the second telecommunications channel or the second telecommunications channels as a function of this analysis, such that the number of second telecommunications channels is a minimum for the respective data transmission situation.

## Revendications

1. Procédé pour la transmission de trains de données continus et/ou discontinus dans un système de télécommunication hybride, en particulier un système "RLL/WLL spécifique ISDN - DECT",
a) dans lequel le système de télécommunication hybride contient :
a1) un premier système partiel de télécommunication (I-TTS) comportant au moins un premier canal de télécommunication, et
a2) un deuxième système partiel de télécommunication (DIIS, RW-TTS) présentant un nombre prédéterminé de deuxièmes canaux de télécommunication,
b) dans lequel le deuxième système partiel de télécommunication (DIIS, RW-TTS) présente pour la transmission des trains de données une première interface de télécommunication (DIFS) et une deuxième interface de télécommunication (DIPS) qui sont reliées l'une à l'autre par l'intermédiaire du deuxième canal de télécommunication, resp. des deuxièmes canaux de télécommunication,
c) dans lequel le deuxième système partiel de télécommunication (DIIS, RW-TTS) est incorporé dans le premier système partiel de télécommunication (I-TTS) comme boucle locale de transmission de messages par l'intermédiaire des deux interfaces de télécommunication (DIFS, DIPS),
**caractérisé en ce que** les interfaces de télécommunication (DIFS, DIPS) analysent la situation de transmission de données sur le premier canal de télécommunication, resp. sur les premiers canaux de télécommunication pour vérifier s'il existe des données à transmettre, s'il s'agit d'une transmission de trains de données discontinus ou non, ainsi que le débit de transmission de données, et en fonction de cette analyse, établissent ou suppriment le deuxième canal de télécommunication, resp. les deuxièmes canaux de télécommunication de façon dynamique de telle sorte que dans chaque situation de transmission de données, le nombre de deuxièmes canaux de télécommunication soit minimum.

2. Procédé selon la revendication 1, **caractérisé en ce que** le premier système partiel de télécommunication (I-TTS) fonctionne suivant la norme ISDN, les données transmises sur le premier canal de télécommunication, resp. sur les premiers canaux de télécommunication étant transmises sur un canal ISDN-B, resp. sur des canaux ISDN-B.

3. Procédé selon la revendication 1 ou 2, **caractérisé en ce que** le deuxième système partiel de télécommunication (DIIS, RW-TTS) fonctionne suivant la norme DECT, les données transmises sur le nombre prédéterminé de deuxièmes canaux de télécommunication étant transmises sur les canaux DECT.

4. Procédé selon la revendication 1 ou 2, **caractérisé en ce que** le deuxième système partiel de télécommunication (DIIS, RW-TTS) fonctionne selon la norme GSM, les données transmises sur le nombre prédéterminé de deuxièmes canaux de télécommunication étant transmises sur les canaux GSM.

5. Procédé selon la revendication 1 ou 2, **caractérisé en ce que** le deuxième système partiel de télécommunication (DIIS, RW-TTS) fonctionne suivant les normes PHS, WACS ou PACS, les données transmises sur le nombre prédéterminé de deuxièmes canaux de télécommunication étant transmises sur des canaux PHS, WACS, resp. PACS.

6. Procédé selon la revendication 1 ou 2, **caractérisé en ce que** le deuxième système de télécommunication (DIIS, RW-TTS) fonctionne selon la norme "IS-54" ou la norme PDC, les données transmises sur le nombre prédéterminé de deuxièmes canaux de télécommunication étant transmises sur des canaux "IS-54" ,resp. PDC.

7. Procédé selon la revendication 1 ou 2, **caractérisé en ce que** le deuxième système partiel de télécommunication (DIIS, RW-TTS) fonctionne selon les principes de transmission CDMA, TDMA et/ou FDMA, les données transmises sur le nombre prédéterminé de deuxièmes canaux de télécommunication étant transmises sur des canaux fonctionnant selon les principes CDMA, TDMA et/ou FDMA.

8. Procédé selon la revendication 3, **caractérisé en ce que** la première interface de télécommunication (DIFS) et la deuxième interface de télécommunication (DIPS) fonctionnent selon la norme "DECT/ISDN Intermediate".

9. Procédé selon l'une des revendications 1 à 8, **caractérisé en ce que** des données vocales, vidéo et/ou modem sont associées aux trains de données continus.

10. Procédé selon l'une des revendications 1 à 9, **caractérisé en ce que** des données par paquets sont associées aux trains de données discontinus.

11. Interface de télécommunication pour la transmission de trains de données continus et/ou discontinus dans un système de télécommunication hybride, en particulier un système "RLL/WLL spécifique ISDN - DECT".
a) dans lequel le système de télécommunication hybride contient :
a1) un premier système partiel de télécommunication (I-TTS) comportant au moins un premier canal de télécommunication, et
a2) un deuxième système partiel de télécommunication (DIIS, RW-TTS) présentant un nombre prédéterminé de deuxièmes canaux de télécommunication,
b) dans lequel le deuxième système partiel de télécommunication (DIIS, RW-TTS) présente pour la transmission des trains de données une première interface de télécommunication (DIFS) et une deuxième interface de télécommunication (DIPS) qui sont reliées l'une à l'autre par l'intermédiaire du deuxième canal de télécommunication, resp. des deuxièmes canaux de télécommunication,
c) dans lequel le deuxième système partiel de télécommunication (DIIS, RW-TTS) est incorporé dans le premier système partiel de télécommunication (I-TTS) comme boucle locale de transmission de messages par l'intermédiaire des deux interfaces de télécommunication (DIFS, DIPS),
**caractérisée en ce qu'**un module de commande (STM) est prévu pour analyser la situation de transmission de données sur le premier canal de télécommunication, resp. sur les premiers canaux de télécommunication pour vérifier s'il existe des données à transmettre, s'il s'agit d'une transmission de trains de données discontinus ou non, ainsi que le débit de transmission de données, et en fonction de cette analyse, pour établir ou supprimer le deuxième canal de télécommunication, resp. les deuxièmes canaux de télécommunication de façon dynamique de telle sorte que dans chaque situation de transmission de données, le nombre de deuxièmes canaux de télécommunication soit minimum.
